# EUROPÄISCHE PATENTSCHRIFT

(11) **EP 1 271 016 B1**
(45) Veröffentlichungstag und Bekanntmachung des Hinweises auf die Patenterteilung: **17.03.2004**
(21) Anmeldenummer: 02008605.4
(22) Anmeldetag: 17.04.2002
(51) Int. Cl.: F16J 15/08

(54) **Flachdichtung und deren Herstellungsverfahren**
Gasket and its fabrication method
Joint plat et méthode de fabrication

(30) Priorität: 22.06.2001 DE 10130329
(43) Veröffentlichungstag der Anmeldung: 02.01.2003
(73) Patentinhaber: Federal-Mogul Sealing Systems GmbH, 57562 Herdorf (DE)
(72) Erfinder: Wagner, Franz-Josef, 26197 Grossenkneten (DE); Flemming, Ralf, 57568 Weitefeld (DE)

(56) Entgegenhaltungen:
- EP-A- 1 108 925
- DE-C- 19 531 231
- DE-C- 19 822 143
- US-A- 5 938 208
- US-A- 6 044 537
- PATENT ABSTRACTS OF JAPAN vol. 013, no. 118 (M-806), 23. März 1989 (1989-03-23) & JP 63 293363 A (NIPPON METAL GASKET KK;OTHERS: 01), 30. November 1988 (1988-11-30)

## Beschreibung

Die Erfindung betrifft ein Verfahren zur Herstellung einer mindestens eine Distanzlage und mindestens eine mit mindestens einer Sicke versehenen Funktionslage bestehenden metallischen Flachdichtung, insbesondere Zylinderkopfdichtung. Eine derartige Dichtung ist z.B. aus dem Dokument DE-A-195 31 231 bekannt.

Die DE-A 195 48 237 betrifft eine metallische Flachdichtung, insbesondere Zylinderkopfdichtung, bestehend aus zwei Deckblechen und mindestens je einer eine Brennraumöffnung umgebenden Sicke sowie einer zwischen den Deckblechen angeordneten Distanzlage, deren freier Endbereich zur Erzielung einer definierten Flächenpressung axial dicker, als der übrige Bereich ausgebildet ist und die Sicken sich symmetrisch zueinander mit ihren konvexen Aufwölbungen in Richtung der Distanzlage erstrecken, wobei die Distanzlage im Bereich einer konvexen Aufwölbung eine Ausnehmung zur Aufnahme der Sicken aufweist. Bei Bedarf kann die axiale Verdickung des Endbereiches der Distanzlage durch Aufbringen ringförmiger Auflagen erzeugt werden.

Die DE-C 197 19 328 beschreibt eine metallische Zylinderkopfdichtung mit wenigstens einem Deckblech und einem Beilageblech, die übereinander angeordnet und mit einer oder mehreren nebeneinander angeordneten Öffnungen versehen sind, wobei in dem wenigstens einen Deckblech um jede Öffnung herum mit Abstand und zu dieser unter Belassung eines geraden Blechabschnitts im Öffnungsrandbereich eine zum Trägerblech weisende Sicke vorgesehen ist, die durch einen äußeren und einen inneren Verformungsbegrenzer geschützt ist. Das Beilageblech endet außerhalb des Bereiches der jeweiligen Sicke. Zur Bildung des äußeren Verformungsbegrenzers ist eine Überlappung mit einem den inneren Verformungsbegrenzer tragenden Ring vorgesehen.

lm Stand der Technik sind bereits Verformungsbegrenzer bekannt, wobei Art und Umfang der Erzeugung als aufwendig angesehen werden und zur Einstellung unterschiedlicher Stopperhöhen im Bereich der Brennraumabdichtung ein aufwendiger und kostenintensiver Fertigungsablauf vorgehalten werden muß.

Der Erfindung liegt die Aufgabe zugrunde, ein Verfahren zur Herstellung einer mindestens eine Distanzlage und mindestens eine Funktionslage aufweisenden metallischen Flachdichtung vorzustellen, mit welchem Flachdichtungen, insbesondere Zylinderkopfdichtungen, mit unterschiedlichen Stopperhöhen im Bereich der Brennraumabdichtung mit geringstmöglichem Aufwand erzeugt werden können. Ferner soll eine Flachdichtung bereitgestellt werden, die diesen Anforderungen gerecht wird.

Diese Aufgabe wird gelöst durch ein Verfahren zur Herstellung einer mindestens eine Distanzlage und mindestens eine mit mindestens einer Sicke versehenen Funktionslage aufweisenden metallischen Flachdichtung, insbesondere Zylinderkopfdichtung, indem im Bereich der Distanz- und auch der Funktionslage mindestens eine Durchgangsöffnung vorgesehen wird, im Durchgangsbereich der Distanzlage mindestens ein Metallkörper aufgebracht wird, der unter Druckbeaufschlagung in die Distanzlage, zumindest einen vertieften Bereich bildend, eingebracht wird und die Funktionslage dergestalt mit der Distanzlage in Wirkverbindung gebracht wird, dass die Sicke zumindest partiell in den vertieften Bereich der Metallkörper eingreift.

Vorteilhafte Weiterbildungen des erfindungsgemäßen Verfahrens sind den zugehörigen Unteransprüchen zu entnehmen.

Bei einer Flachdichtung, insbesondere Zylinderkopfdichtung, mit mindestens einer mindestens eine Durchgangsöffnung aufweisenden Distanzlage sowie mindestens einer auch mit mindestens einer Durchgangsöffnung sowie mindestens einer Sicke versehenen Funktionslage kann die Aufgabe darüber hinaus auch dadurch gelöst werden, dass die Distanzlage im Bereich der Durchgangsöffnung mit einem in selbige eingebrachten, mindestens einen vertieften Bereich bildenden, Metallkörper versehen ist, und dass die Sicke der Funktionslage zumindest partiell in den vertieften Bereich des Metallkörpers eingreift.

Vorteilhafte Weiterbildungen der erfindungsgemäßen Flachdichtung sind den zugehörigen Unteransprüchen zu entnehmen.

Das erfindungsgemäße Herstellungsverfahren ist im Vergleich zum Stand der Technik als einfacher und somit kostengünstiger anzusehen, wobei die Einstellung der unterschiedlichen Stopperhöhen unabhängig von der jeweiligen Blechdicke ist. Bei schmalen Zylinderstegen und dem dadurch erforderlichen Einsatz einer Sicke im Steg kann eine zusammenhängende Metallbrille alternativ zum Metallring auf der Distanzlage aufgebracht werden.

Der als Metallring oder Metallbrille ausgebildete Metallkörper wird vorzugsweise auf der Distanzlage aufgeschweißt oder aufgeklebt. Durch Formprägen des Metallkörpers in die Distanzlage hinein werden verschiedene Bereiche gebildet, die in Bezug auf die Distanzlage beliebige unterschiedliche Höhen aufweisen können.

Der formgeprägte Metallkörper kann ein- und/oder beidseitig der Distanzlage vorgesehen werden, wobei unabhängig davon auch noch weitere Funktionslagen der Distanzlage zugeordnet werden können. Des weiteren kann eine Topographie über dem Umfang der unterschiedlichen Höhen geprägt werden. Infolge der unterschiedlich einstellbaren Höhen des Metallkörpers lassen sich die Pressungen aufgrund berechneter zulässiger Materialbeanspruchungen in diesen Bereichen der Brennkraftmaschine reduzieren sowie die für die Sicken ertragbaren Schwingungsamplituden bestimmen.

Der Erfindungsgegenstand ist anhand eines Ausführungsbeispiels in der Zeichnung dargestellt und wird wie folgt beschrieben. Es zeigen
- Fig. 1: Draufsicht auf eine nur teilweise dargestellte Zylinderkopfdichtung
- Fig. 2: Schnitt durch die Zylinderkopfdichtung gemäß der Linie A-A der Figur 1

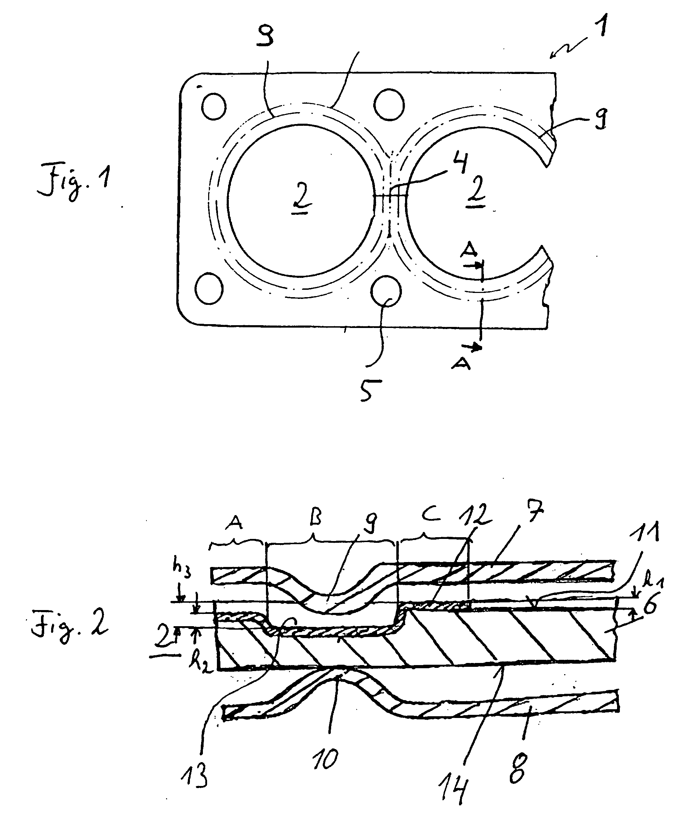

Fig. 1 zeigt als Prinzipskizze eine Zylinderkopfdichtung 1, einsetzbar für eine mehrzylindrige Brennkraftmaschine. Die Zylinderkopfdichtung 1 beinhaltet mehrere Durchgangsöffnungen 2, wobei im Bereich der Durchgangsöffnungen 2 umlaufende Sicken 9 angeordnet sind und zwischen den Durchgangsöffnungen 2 ein Stegbereich 4 ausgebildet ist. Ferner sind Schraubendurchgangslöcher 5 zur Positionierung der Zylinderkopfdichtung 1 auf einem nicht weiter dargestellten Zylinderkopf vorgesehen.

Fig. 2 zeigt einen Querschnitt durch die Zylinderkopfdichtung 1 gemäß Linie A- A der Fig. 1. Die Zylinderkopfdichtung 1 beinhaltet in diesem Beispiel eine Distanzlage 6 sowie zwei Funktionslagen 7,8, wobei eine jede Funktionslage 7,8 mit einer in Richtung der Distanzlage 6 weisenden Sicke 9,10 versehen ist. In diesem Beispiel wurde auf die eine Stirnseite 11 der Distanzlage 6 ein Metallkörper in Form eines Metallringes 12 aufgebracht, wobei letzterer schweißtechnisch mit der metallischen Distanzlage 6 verbunden wurde. Der Metallring 12 soll für dieses Beispiel eine Dicke von 0,2 mm aufweisen. Durch Formprägen das Metallringes 12 in die Distanzlage 6 werden Bereiche A,B,C gebildet, wobei beliebige unterschiedliche Höhen h1,h2,h3 eingestellt werden können. Infolge der Formprägung wird ein vertiefter Bereich 13 einerseits in der Distanzlage 6 und andererseits im Metallkörper 12 gebildet, in welchen die Sicke 9 der Funktionslage 7 zumindest partiell eingreift. Vornehmlich ist die Höhe h1 die Dicke des aufgebrachten Metallringes 12. Im Bereich B liegt angeordnet die Sicke 9 der Funktionslage 7. In diesem Beispiel soll lediglich ein Metallring 12 vorgesehen werden, während auf der gegenüber liegenden Seite die Sicke 10 der Funktionslage 8 unmittelbar an der Stirnfläche 14 der Distanzlage 6 zur Anlage kommt. Dies ist jedoch nicht zwingend erforderlich, vielmehr kann auch auf der Stirnfläche 14 ein formgeprägter Metallring vorgesehen werden. Darüber hinaus können auch noch weitere Funktionslagen zugeschaltet werden. Ferner kann eine Topographie über dem Umfang der unterschiedlichen Höhen geprägt werden.

Durch das erfindungsgemäße Herstellungsverfahren der Zylinderkopfdichtung 1 können mit ein und derselben Werkzeugaufspannung die bereits angesprochenen unterschiedlichen Höhen h1,h2,h3, beidseitige Stopperelemente bildend, realisiert werden, wodurch sich die Pressungen aufgrund der gegebenen zulässigen Materialbeanspruchungen in diesen Bereichen der Brennkraftmaschine optimal anpassen lassen. Die Einstellung der unterschiedlichen Höhen h1,h2,h3 ist unabhängig von deren Dicke des Metallringes 12, vielmehr wird sie bestimmt durch die Materialauswahl der Distanzlage 6 sowie die durch die Prägemaschine auf gebrachten Verformungsdrücke. Eventuell vorhandene Materialüberstände können im Bereich der Durchgangsöffnungen 2 durch Ausstanzen entfernt werden.

Bei schmalen Zylinderstegen der Brennkraftmaschine und dem dadurch erforderlichen Einsatz einer Sicke im Steg kann eine zusammenhängende Metallbrille anstelle einzelner Metallringe auf der Distanzlage 6 aufgebracht werden.

## Patentansprüche

1. Verfahren zur Herstellung einer mindestens eine Distanzlage (6) und mindestens eine mit mindestens einer Sicke (9,10) versehenen Funktionslage (7,8) aufweisenden metallischen Flachdichtung, insbesondere Zylinderkopfdichtung (1), indem im Bereich der Distanz- (6) und auch der Funktionslage (7,8) mindestens eine Durchgangsöffnung (2) vorgesehen wird, im Durchgangsbereich (2) der Distanzlage (6) mindestens ein Metallkörper (12) aufgebracht wird, der unter Druckbeaufschlagung in die Distanzlage (6), zumindest einen vertieften Bereich (13) bildend, eingebracht wird und die Funktionslage (7) dergestalt mit der Distanzlage (6) in Wirkverbindung gebracht wird, dass die Sicke (9) zumindest partiell in den vertieften Bereich (13) des Metallkörpers (12) eingreift.

2. Verfahren nach Anspruch 1, **dadurch gekennzeichnet, dass** der Metallkörper (12) auf die Distanzlage (6) aufgeschweißt oder aufgeklebt wird.

3. Verfahren nach Anspruch 1 oder 2, **dadurch gekennzeichnet, dass** der insbesondere als Metallring ausgebildete Metallkörper (12) durch Formprägen in die Distanzlage (6) eingebracht wird.

4. Verfahren nach einem der Ansprüche 1 bis 3, **dadurch gekennzeichnet, dass** im Bereich der Distanzlage (6) zwei einander im wesentlichen gegenüber liegende Metallkörper (12) eingebracht werden, und dass mehrere Funktionslagen (7,8) mit der Distanzlage (6) in Wirkverbindung gebracht werden.

5. Verfahren nach einem der Ansprüche 1 bis 4, **dadurch gekennzeichnet, dass** am Metallkörper (12) mehrere Bereiche (A,B,C) angeformt werden, die vorgebbare, ggf. unterschiedliche Höhen (h1,h2,h3), bezogen auf die Distanzlage (6), aufweisen.

6. Verfahren nach einem der Ansprüche 1 bis 5, **dadurch gekennzeichnet, dass** bei Verwendung der Flachdichtung als Zylinderkopfdichtung (1) für schmale Zylinderstege (4) von Brennkraftmaschinen der Metallkörper (12) als zusammenhängende Metallbrille ausgebildet wird.

7. Flachdichtung, insbesondere Zylinderkopfdichtung (1), mit mindestens einer mindestens eine Durchgangsöffnung (2) aufweisenden Distanzlage (6) sowie mindestens einer, ggf. auch mit mindestens einer Durchgangsöffnung (2) sowie mindestens einer Sicke (9,10) versehenen Funktionslage (7,8), **dadurch gekennzeichnet, dass** die Distanzlage (6) im Bereich der Durchgangsöffnung (2) mit einem in selbige eingebrachten, mindestens einen vertieften Bereich (13) bildenden Metallkörper (12) versehen ist, und dass die Sicke (9) der Funktionslage (7) zumindest partiell in den vertieften Bereich (13) des Metallkörpers (12) eingreift.

8. Flachdichtung nach Anspruch 7, **dadurch gekennzeichnet, dass** der Metallkörper (12) einen etwa topfartigen Querschnitt aufweist.

9. Flachdichtung nach Anspruch 7 oder 8, **dadurch gekennzeichnet, dass** die Breite der Vertiefung (13) größer als die Breite der Sicke (9) ist.

10. Flachdichtung nach einem der Ansprüche 7 bis 9, **dadurch gekennzeichnet, dass** der Metallkörper (12) mehrere Bereiche (A,B,C) beinhaltet, die mit vorgebbaren, ggf. unterschiedlichen Höhen (h1,h2,h3) in bezug auf die Distanzlage (6) versehen sind.

11. Flachdichtung nach einem der Ansprüche 7 bis 10, **dadurch gekennzeichnet, dass** im Bereich der Distanzlage (6) einander gegenüber liegende vertiefte Bereiche bildende Metallkörper (12) vorgesehen sind, in welche Sicken (9,10) korrespondierender Funktionslagen (7,8) zumindest partiell eingreifen.

## Claims

1. Method for producing a metallic flat gasket, in particular a cylinder head gasket (1), which has at least one spacer layer (6) and at least one functional layer (7, 8) provided with at least one bead (9, 10), in that at least one through-opening (2) is provided in the region of the spacer layer (6) and also of the functional layer (7, 8), at least one metal body (12) is applied in the through-region (2) of the spacer layer (6), which metal body is introduced into the spacer layer (6) by application of pressure, forming at least one recessed region (13), and the functional layer (7) is brought into effective connection with the spacer layer (6) in such a manner that the bead (9) engages at least partially in the recessed region (13) of the metal body (12).

2. Method according to claim 1, **characterised in that** the metal body (12) is welded or glued onto the spacer layer (6).

3. Method according to claim 1 or 2, **characterised in that** the metal body (12), which is formed in particular as a metal ring, is introduced into the spacer layer (6) by shape embossing.

4. Method according to one of the claims 1 to 3, **characterised in that**, in the region of the spacer layer (6), two metal bodies (12) which are situated essentially opposite each other are introduced and **in that** a plurality of functional layers (7, 8) is brought into effective connection with the spacer layer (6).

5. Method according to one of the claims 1 to 4, **characterised in that** a plurality of regions (A, B, C) is formed on the metal body (12), which regions have prescribable, if necessary different heights (h1, h2, h3) with respect to the spacer layer (6).

6. Method according to one of the claims 1 to 5, **characterised in that**, when using the flat gasket as a cylinder head gasket (1) for narrow cylinder webs (4) of internal combustion engines, the metal body (12) is configured as a connecting metal spectacle.

7. Flat gasket, in particular cylinder head gasket (1), having at least one spacer layer (6), which has at least one through-opening (2), and also having at least one functional layer (7, 8), which is provided if necessary also with at least one through-opening (2) and with at least one bead (9, 10), **characterised in that** the spacer layer (6) in the region of the through-opening (2) is provided with a metal body, which is introduced into the same and forms at least one recessed region (13), and **in that** the bead (9) of the functional layer (7) engages at least partially in the recessed region (13) of the metal body (12).

8. Flat gasket according to claim 7, **characterised in that** the metal body (12) has an approximately pot-like cross-section.

9. Flat gasket according to claim 7 or 8, **characterised in that** the width of the recess (12) is greater that the width of the bead (9).

10. Flat gasket according to one of the claims 7 to 9, **characterised in that** the metal body (12) comprises a plurality of regions (A, B, C) which are provided with prescribable, if necessary different heights (h1, h2, h3) with respect to the spacer layer (6).

11. Flat gasket according to one of the claims 7 to 10, **characterised in that**, in the region of the spacer layer (6), metal bodies (12) are provided which are situated opposite each other and form recessed regions, into which metal bodies beads (9, 10) of corresponding functional layers (7, 8) engage at least partially.

## Revendications

1. Procédé pour la fabrication d'un joint plat métallique, en particulier un joint de culasse, comprenant au moins une couche d'espacement (6) et au moins une couche de fonction (7, 8) pourvue d'au moins une moulure (9, 10), dans lequel il est prévu au moins une ouverture de passage dans la zone de la couche d'espacement (6) et également de la couche de fonction (7, 8), au moins un corps métallique (12) étant appliqué dans la zone de passage (2) de la couche d'espacement (6), ledit corps étant inséré, par application d'une pression, dans la couche d'espacement (6) formant au moins une zone évidée (13) et la couche de fonction (7) est mise en liaison active avec la couche d'espacement (6) de telle sorte que la moulure (9) pénètre au moins partiellement dans la zone évidée (13) du corps métallique (12).

2. Procédé selon la revendication 1, **caractérisé en ce que** le corps métallique (12) est soudé ou collé sur la couche d'espacement (6).

3. Procédé selon la revendication 1 ou 2, **caractérisé en ce que** le corps métallique (12), en particulier réalisé sous la forme d'un anneau métallique, est inséré dans la couche d'espacement (6) par matriçage de forme.

4. Procédé selon l'une des revendications 1 à 3, **caractérisé en ce que** dans la zone de la couche d'espacement (6) sont insérés deux corps métalliques (12) sensiblement opposés, et **en ce que** plusieurs couches de fonction (7, 8) sont amenées en liaison active avec la couche d'espacement (6).

5. Procédé selon l'une des revendications 1 à 4, **caractérisé en ce que** plusieurs zones (A, B, C) sont formées au niveau du corps métallique, lesdites zones présentant des hauteurs prédéterminables, éventuellement différentes (h1, h2, h3) par rapport à la couche d'espacement (6).

6. Procédé selon l'une des revendications 1 à 5, **caractérisé en ce que** le corps métallique (12) est réalisé sous la forme de lunettes métalliques reliées entre elles lorsque l'on utilise le joint plat en tant que joint de culasse (1) pour des cloisons de cylindre fines (4) de moteurs à combustion interne.

7. Joint plat, en particulier joint de culasse, comprenant au moins une couche d'espacement (6) présentant au moins une ouverture de passage (2) ainsi qu'au moins une couche de fonction (7, 8) éventuellement pourvue aussi avec au moins une ouverture de passage (2) ainsi qu'avec au moins une moulure (9, 10), **caractérisé en ce que** la couche d'espacement (6) est pourvue, dans la zone de l'ouverture de passage (2), d'un corps métallique (12) introduit dans l'ouverture de passage (6) et formant au moins une zone évidée (13), et **en ce que** la moulure (9) de la couche de fonction (7) pénètre au moins partiellement dans la zone évidée (13) du corps métallique.

8. Joint plat selon la revendication 7, **caractérisé en ce que** le corps métallique (12) présente une section transversale environ en forme de cuvette.

9. Joint plat selon la revendication 7 ou 8, **caractérisé en ce que** la largeur de l'évidement (13) est supérieure à la largeur de la moulure (9).

10. Joint plat selon l'une des revendications 7 à 9, **caractérisé en ce que** le corps métallique (12) comprend plusieurs zones (A, B, C), qui sont pourvues de hauteurs prédéterminables éventuellement différentes (h1, h2, h3) par rapport à la couche d'espacement (6).

11. Joint plat selon l'une des revendications 7 à 10, **caractérisé en ce que** dans la zone de la couche d'espacement (6) sont prévus des corps métalliques (12) formant des zones évidées opposées, dans les moulures (9, 10) desquelles pénètrent au moins partiellement des couches de fonction correspondantes (7, 8).
